# EUROPEAN PATENT SPECIFICATION

(11) **EP 4 469 342 B1**
(45) Date of publication and mention of the grant of the patent: **05.08.2026**
(21) Application number: 23701547.4
(22) Date of filing: 25.01.2023
(51) Int. Cl.: B62M 6/55, B62M 11/06, B62M 11/14, B62M 25/08, B62M 6/45

(54) **GEARBOX, POWERTRAIN FOR A VEHICLE COMPRISING SAID GEARBOX AND VEHICLE COMPRISING SAID GEARBOX**
GETRIEBE, ANTRIEBSSTRANG FÜR EIN FAHRZEUG MIT DIESEM GETRIEBE UND FAHRZEUG MIT DIESEM GETRIEBE
BOÎTE DE VITESSES, GROUPE MOTOPROPULSEUR POUR VÉHICULE COMPRENANT LADITE BOÎTE DE VITESSES ET VÉHICULE COMPRENANT LADITE BOÎTE DE VITESSES

(30) Priority: 27.01.2022 IT 202200001361
(43) Date of publication of application: 04.12.2024
(73) Proprietor: Menichetti, Paolo, 55100 Santa Maria a Colle (LU) (IT)
(72) Inventor: Menichetti, Paolo, 55100 Santa Maria a Colle (LU) (IT)
(74) Representative: Mannucci, Michele
(86) International application number: PCT/EP2023/051833
(87) International publication number: WO 2023/144225

(56) References cited:
- DE-C- 740 086
- US-A- 3 241 384
- US-A- 749 186
- US-A1- 2019 368 579

## Description

### TECHNICAL FIELD

The present invention relates to a gearbox, hereinafter also briefly referred to as a "gearbox", in particular but not exclusively for human-powered vehicles, for example pedal assisted bicycles.

According to a particular aspect, the invention relates to vehicles such as bicycles of various types, cycle taxis, tricycles, quadricycles, torpedoes, urban rickshaws, tandems and others still, comprising an assisted propulsion system, i.e. with assisted drive. In the present description and in the appended claims, the terms assisted drive or assisted propulsion are used as synonyms, unless otherwise indicated. By assisted propulsion or assisted drive vehicle it is meant a vehicle which can be propelled by the use of muscular power, in combination with a torque generated by a motor, for example in particular an electric motor. A typical example of an assisted drive or assisted propulsion vehicle, as understood herein, is a pedal assisted bicycle.

### BACKGROUND ART

Devices are known for changing the transmission ratio of human-powered vehicles such as bicycles, comprising a plurality of pinions mounted coaxially to the hub of a driving wheel, each pinion having a different diameter so as to define a different transmission ratio, a derailleur for disengaging the drive chain from a pinion and making it mesh with another pinion, in order to change gear, and a control, usually a manual cable control, to operate the derailleur.

In such devices, the various pinions are arranged on distinct planes, perpendicular to the hub of the driving wheel. In general, there will therefore be at most one pinion arranged in the same plane as the crown. Therefore, in general, the links of the drive chain are not coplanar, but are arranged at an angle to each other, while the ideal working condition for a drive chain provides for the links to be aligned in the same plane. The arrangement described above involves high friction between the links and, therefore, a more or less accentuated loss of transmission performance in the various gears, noise and easy wear, with loss of transversal stiffness, which requires frequent maintenance and compromises the functionality of the gearbox.

Another drawback of derailleur gear devices is the impossibility of changing rapidly and/or directly between non-consecutive gear ratios. This penalizes the performance of the vehicle especially in the event of sudden and significant variations in the slope of the road.

Furthermore, derailleur gear devices do not allow the transmission ratio to be changed when the vehicle is stationary, nor to face a hill with the suitable transmission ratio already set.

To solve these problems, gear devices have been developed consisting of a box containing the gears, integrated in the hub of the driving wheel, typically the rear one, or in the central axle. These devices comprise a plurality of toothed wheels, each corresponding to a given transmission ratio, arranged along their own axis, and therefore have a particularly elongated shape along the direction of their axis. However, these devices have various drawbacks.

The devices integrated in the wheel hub are not suitable for retrofitting, i.e. they are generally not easily integrated into pre-existing vehicles, in particular, for modernizing vehicles based on obsolete techniques. In fact, they require the wheel in which they are to be installed to be replaced with one suitable for assembly, or to be modified so as to make it so, an operation which is very difficult to perform by the user. Furthermore, since the hub with the integrated gearbox replaces the normal hub and becomes part of the wheel, in the event of damage to the wheel, the rapid recovery of the wheel and gearbox can only take place if a second wheel is also provided with a gearbox, with a significant increase in costs.

Furthermore, the devices integrated into the wheel hub place their entire weight on the rear wheel, reducing the vehicle's dynamic balance.

Devices integrated in the central axis, on the other hand, require a specially shaped frame for their installation and therefore can only be replaced with identical devices, limiting the user's freedom of choice. Furthermore, for the same reason, these devices also do not offer the possibility of retrofitting.

In addition, both the devices integrated in the wheel hub and those integrated in the central shaft, of the type indicated above, make the introduction of a pedal assisting motor disadvantageous or impossible, above all due to the axial size of the gear change devices, due to the arrangement along the axis of the toothed wheels corresponding to the various transmission ratios.

In fact, the gearbox devices of the known type for installation in the hub of the driving wheel completely occupy the space usually used to install the motor, forcing the use of a less common and more onerous motor for mounting on the central axle or on another wheel, typically on the front wheel. On the other hand, the devices integrated in the central axis do not allow integration with a coaxial motor as the result would be an integrated device that is too long to be positioned between the cranks. For this reason, the motor must be installed separately at the hub of the drive wheel, typically the rear one, with similar problems of weight distribution on the vehicle, further aggravated if the electric battery is mounted above the drive wheel.

DE740086 describes a gearbox for vehicles with a central driven shaft on which several driven central gears having variable diameters are keyed. A drive shaft coaxial to the driven shaft transmits motion to a drive gear. Secondary shafts are arranged around the driven shaft. Keyed to each secondary shaft are: a first toothed wheel adapted to mesh with the driving gear and a second toothed wheel adapted to mesh with one of the central gears. The number of driven shafts equals the number of central driven gears. To transmit motion from the drive shaft to the driven shaft, one or the other of the secondary shafts is selected. Each secondary shaft provides a different gear ratio between the drive shaft and the central driven shaft, due to the fact that the second pinion of each secondary shaft meshes with a different central driven gear. In order to bring the secondary shaft corresponding to the desired transmission ratio into the operative position, a radial movement is imposed on the secondary shaft towards the driving shaft and the central driven shaft. For this purpose, each secondary shaft is supported on pads that are radially movable with respect to the axis of the drive shaft and the central driven shaft. The movement in the radial direction is obtained by translation of the support pads of the secondary shafts and is controlled by cams mounted on a ring which rotates around the axis of the driving shaft and of the central driven shaft.

US2019/0368579 (WO2018095910) discloses a gearbox particularly suitable for bicycles, which in some versions is integrated with an electric motor to form a pedal assisted vehicle. This device overcomes many of the drawbacks of the prior art devices, but still has some limitations and room for improvement. In particular, the device disclosed in this prior art publication, especially in the pedal assisted version, cannot be freely inserted in a pre-existing vehicle, for example in a pre-existing bicycle, but requires the creation of an ad hoc frame. A gearbox according to the preamble of claim 1 is disclosed in US749186. A further gearbox is disclosed in US3241384.

It would therefore be desirable to provide a gearbox with an integrated motor which fully or partially overcomes the drawbacks of the prior art devices.

### SUMMARY

A gearbox according to the invention is defined in independent claim 1. Preferred embodiments of the invention are provided in the dependent claims. A method of converting a human powered vehicle into an assisted power vehicle according to the invention is defined in independent claim 17.

According to one aspect, a gearbox is disclosed herein comprising an annular support, on which pairs of gears for the input of motion to the gearbox are rotatably supported. Each pair of gears comprises a first gear adapted to receive an input motion, and a second gear; the first gear and the second gear being coaxial and angularly coupled to each other to rotate integrally.

In practice, each pair of gears is rotatably supported on the annular support, in the sense that it rotates around the axis common to the two coaxial gears, the axis being integral with the annular support. In other words, the annular support rotatably supports each pair of gears.

Each pair of gears defines a transmission ratio different from the transmission ratios defined by the other pairs of gears. The annular support is angularly movable around a selection axis to selectively bring one of said pairs of gears into an angular take-off position of the motion to the gearbox. The gearbox further comprises a mechanical connection between the second gear of the pair of gears which is in the angular take-off position of the motion to gearbox, and an output shaft having an axis of rotation passing through the annular support and parallel to the selection axis or coincident therewith, i.e. with an arrangement in which the output shaft and the annular bearing are coaxial. In practice, the output shaft also extends inside the annular support. Basically, in the gearbox of the present invention the motion is peripherally introduced, through one of the gears carried by the annular support, and transmitted towards the inside of the gearbox, up to a shaft which passes through the annular support. To this end, advantageously, each first gear of each pair of gears and the annular support are arranged such that the first gear being in the angular take-off position of the motion is positioned to receive the input motion peripherally from a pinion of a drive member, said pinion being external to the annular support. In practice, in this way it is possible to reduce the input torque to the gearbox and it is possible, for example, to use a low torque motor. The mechanical stresses on the annular support, which constitutes, with the respective pairs of gears, the input member of the motion in the gearbox, are also reduced.

In some applications described herein, this allows creating particularly compact and efficient drive systems, which can be easily retrofitted to frames of existing vehicle, if desired.

According to the invention as defined in claim 1, the mechanical connection comprises a gear train, which typically may configure a reduction gear.

According to the invention as defined in claim 1, the mechanical connection comprises a first ring gear meshing with the second gear of the pair of gears which is in the angular take-off position of the motion in input to the gearbox. The ring gear is preferably a ring gear with external teeth and has an axis of rotation passing inside the annular support, for example coinciding with the selection axis around which the annular support rotates, or parallel thereto.

The first ring gear can be part of a reduction or multiplication gear train, depending on the torques required at the output and the torque made available by the motion source which transmits the motion to the gearbox.

When the mechanical connection comprises a reduction unit, this may comprise the first ring gear and may be in the form of an epicyclic gearing. In practical embodiments, the first ring gear constitutes the planet carrier of the epicyclic gearing.

The possibility of using a reducer with a lower reduction ratio, or (if the circumstances require it) a multiplier is not excluded.

In advantageous embodiments, the annular support and the first ring gear are coaxial, or parallel and slightly spaced apart. In these cases, the first ring gear can mesh with the second gears of each pair of gears in any angular position of the annular support.

Further advantageous features and embodiments of the gearbox are described below with reference to the accompanying drawings and in the appended claims.

According to a further aspect, a subject of the invention is also a powertrain for a vehicle, comprising: a motor having a drive shaft with a pinion; and a gearbox as outlined above and described in more detail below. Advantageously, in the embodiments described herein, the pinion comprises an axis of rotation external to the annular support, so that motion is input to the gearbox peripherally via the first gear of the pair of gears which is in the motion take-off position.

Advantageously, the annular support of the gearbox may be positioned so as to selectively mesh one of the first gears of said pairs of gears with the pinion, according to the required transmission ratio, by means of a rotation of the annular support around the selection axis. The selection rotation is free, in the sense that it is not limited to a single round angle (360° angle).

Further features and embodiments of the powertrain are described below with reference to the accompanying drawings and are defined in the appended claims.

The invention also relates to a vehicle comprising a powertrain as defined above.

In particular, the vehicle can be a traction assisted vehicle, i.e. a propulsion assisted vehicle, for example a pedal assisted bicycle.

Specifically, according to some embodiments, the invention concerns a vehicle comprising: a frame; at least one driving wheel; at least onesteered wheel; a motor comprising a drive shaft with a pinion rotated by the drive shaft; a gearbox interposed between the motor and the driving wheel. The gearbox comprises an annular support, on which pairs of input gears are rotatably supported. Each pair of gears comprises a first gear and a second gear coaxial and angularly coupled to each other to rotate integrally. Each pair of gears defines a transmission ratio different from the transmission ratios defined by the other pairs of gears. The annular support is angularly movable around a selection axis to selectively bring one of said pairs of gears into an active position, in which the first gear of the pair of gears being in the active position meshes with the pinion of the drive shaft. The vehicle further comprises a mechanical connection between the second gear of the pair of gears which is in the active position, and an output shaft having an axis of rotation passing through the annular support and parallel to the selection axis. To perform the shift, i.e. the change of transmission ratio, a device for rotating the annular support can be provided, capable of selectively bringing the annular support into a plurality of angular positions. In each angular position a respective pair of gears is in the active position, with the respective first gear meshing with the drive shaft pinion. The control device can be an automatic, semi-automatic, servo-assisted or fully manual device. Preferred embodiments provide for an automatic or semi-automatic gear changing system.

Further features and embodiments of the vehicle are described below with reference to the accompanying drawings and are defined in the appended claims.

The invention also relates to a method for converting a human-powered vehicle, for example a bicycle, into an assisted power or assisted propulsion vehicle. The method comprises the step of replacing a muscle force application mechanism to at least one drive wheel of the vehicle with a powertrain as outlined above and more fully described in various embodiments below.

In the present description and in the appended claims, assisted pedal, assisted traction, or assisted propulsion vehicle generally refers to a vehicle which has a motor, for example an electric motor, combined, through a suitable combination mechanism, with a mechanism which allows to apply to the driving wheel or wheels of the vehicle also a torque generated by muscular effort of the vehicle user or of several vehicle users simultaneously.

The torque can be generated by the user's lower limbs or upper limbs, generally by rotating or swinging pedal cranks, levers, arms, handlebars or other members for applying muscular force.

A vehicle with "assisted pedaling" or with assisted traction or assisted propulsion therefore also includes, in the sense herein understood, a vehicle in which the muscular force is generated by the upper limbs (arms) and not necessarily by the lower limbs (legs) of the user.

### BRIEF DESCRIPTION OF THE DRAWINGS

The invention will be better understood by following the description and the accompanying drawings, which illustrate an exemplifying and non-limiting embodiment of the invention. More particularly, the drawings show:
Fig.1 is a side view of a bicycle comprising a gearbox according to the present invention, integrated with a motor for assisted pedaling, in a first embodiment;
Fig. 2 is a plan view according to II-II of Fig. 1;
Fig. 3 is a partial side view according to III-III of Fig. 2;
Fig. 4 is a section through IV-IV of Fig. 5;
Fig. 5 is a section according to V-V of Fig. 4;
Fig. 6 is a section through VI-VI of Fig. 4;
Fig. 7 is a functional block diagram of the control system of the vehicle with shifting and pedal assistance system;
Fig. 8 is a plan view, similar to the view of Fig. 2, of a second embodiment; according to VIII-VIII of Fig. 2
Fig. 9 is a section, similar to the section of Fig. 5, of the second embodiment, according to IX-IX of Fig. 4; and
Fig. 10 is a section, similar to the section of Fig. 6, of the second embodiment, according to X-X of Fig. 4.

### DETAILED DESCRIPTION

A gearbox applied to a pedal assisted bicycle will be described below. This application is particularly advantageous, but it must be understood that the gearbox described herein can also have other applications. For example, the gearbox may be used on a vehicle other than a bicycle, such as a tricycle or quadricycle, or a hand-operated vehicle. Furthermore, the gearbox can also find advantageous applications in vehicles driven exclusively by means of the motor associated with the gearbox, i.e. without pedal cranks or other member for applying muscular force.

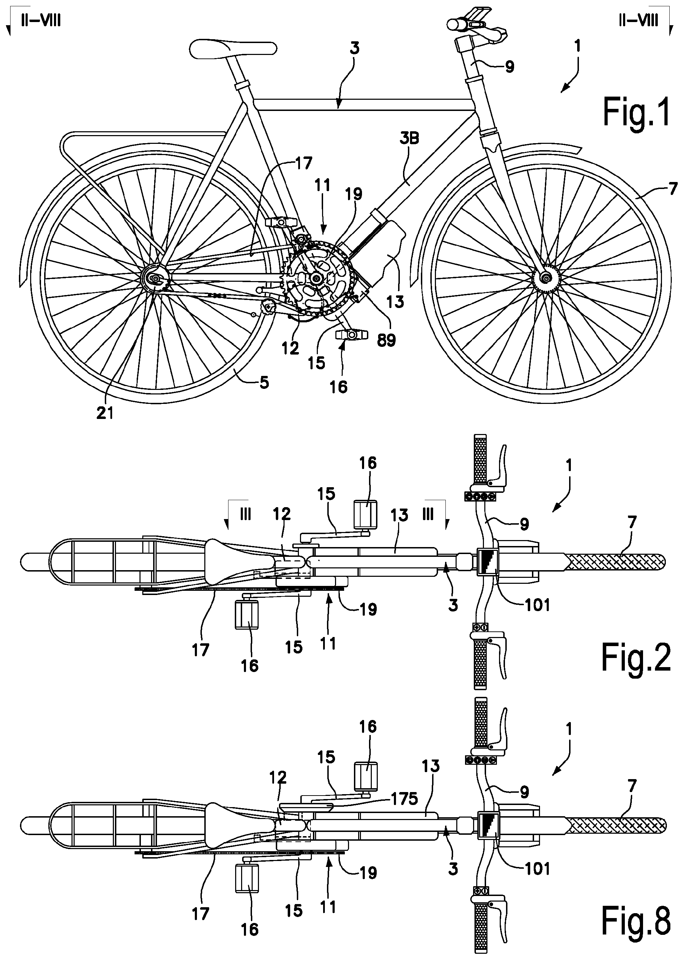

A first embodiment of the gearbox to a pedal assisted bicycle is shown in Figs. 1 to 7. Fig. 1 shows a side view of a bicycle 1 and Fig. 2 shows the top plan view thereof. The bicycle 1 comprises a frame 3, a rear driving wheel 5, a front steered wheel 7 and a handlebar 9. In the illustrated example, the bicycle 1 is a pedal assisted bicycle. Reference numeral 11 indicates as a whole an actuation unit, herein indicated as a powertrain, which comprises a motor, typically an electric motor 12, described below, powered by a battery or electric accumulator 13 and controlled by a central unit described below. Reference numeral 15 indicates pedal cranks with respective pedals 16 for applying to the powertrain 11 a muscular force exerted by the user. The drive unit 11 comprises a toothed wheel for chain, or so-called chainring 19, around which a transmission chain 17 is entrained, which transmits motion to a pinion 21 keyed to the rear driving wheel 5.

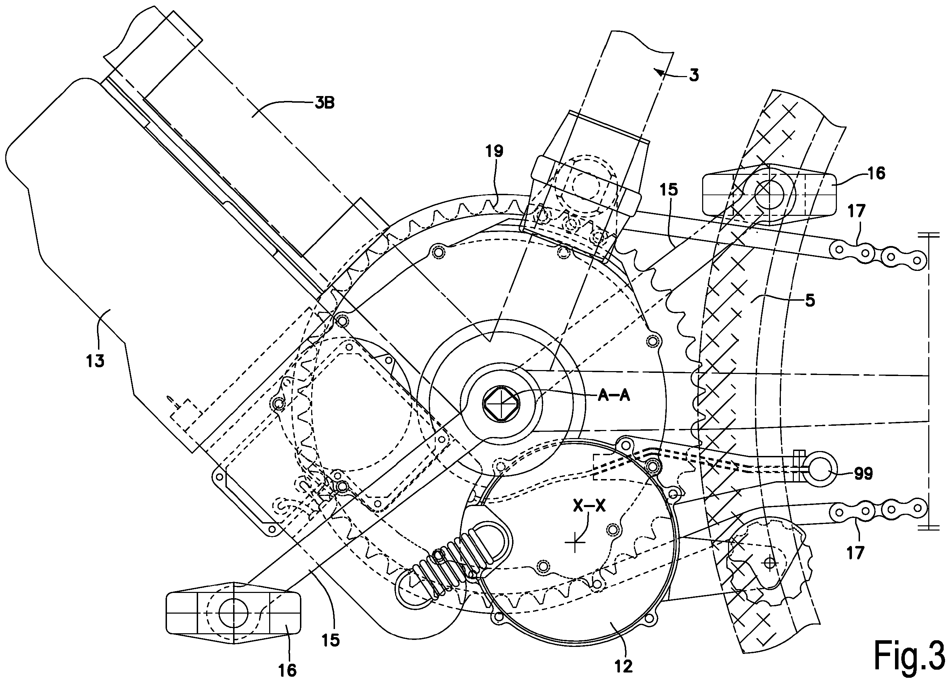

The powertrain 11 also comprises a gearbox between the electric motor 12 and the chainring 19. Furthermore, the powertrain 11 comprises a mechanism which allows the driving torque generated by the electric motor 12 to be combined with the driving torque generated by the muscular force applied via the pedal cranks 15. The gearbox and the drive torque combination mechanism are described in detail below with reference to Figs. 3 to 7.

As illustrated in particular in Figs. 3 to 6, the powertrain comprises a housing indicated as a whole with 23, which can consist of several parts assembled together, inside which are housed the motor 12, the gearbox and the combination mechanism of the driving torque generated by the motor 12 and by the pedal cranks 15 with relative pedals 16. The housing 23 is integral with the frame 3.

In the illustrated embodiment, the housing 23 comprises a bush 23A, housed in a cylindrical component 3A of the frame 3. The bush 23A constitutes the seat of the bottom bracket of the bicycle 1, i.e. of the assembly comprising the pedal cranks 15, the pedals 16 and the shaft or pin which joins the pedal cranks 15 together, as described further on.

The motor 12 has an output shaft 25 on which a pinion 27 is keyed. The pinion 27 can be fixed to the shaft 25 by a keyway or other type of coupling, or it can be formed integral with the shaft 25. Reference X-X indicates the axis of rotation of the motor 12 and of the relative shaft 25.

The pinion 27 transmits the torque and therefore the movement generated by the motor 12 to the chainring 19 through a gearbox indicated as a whole with 29. The gearbox 29 comprises an annular support 31, supported in the housing 23 so as to be able to rotate around an axis A-A which, in the example illustrated, coincides with the rotation axis of the pedal cranks 15 and constitutes a selection axis for selecting the transmission ratio, as will be clear from the following description. In the illustrated embodiment, the annular support 31 comprises two rings integral with each other. On the annular support 31, and more particularly between the two rings which form the main part thereof, some pairs of gears 33 are rotatably supported. In the illustrated example, ten pairs of gears are provided, marked sequentially from 33A to 33J, since the gearbox 29 has ten distinct transmission ratios. The reference numeral 33 hereafter indicates a generic pair of gears.

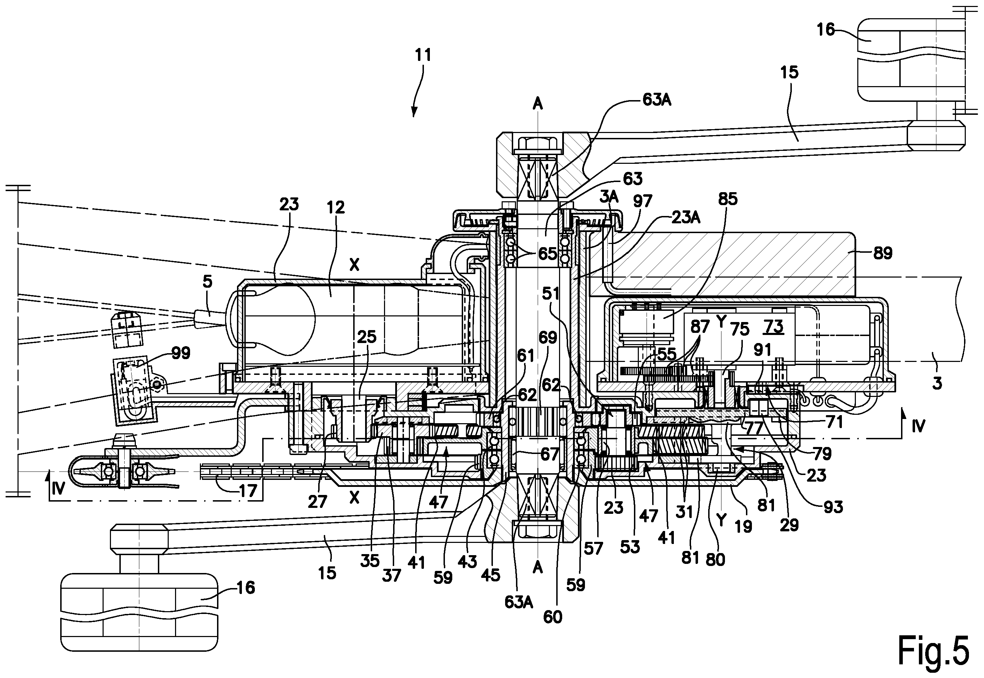

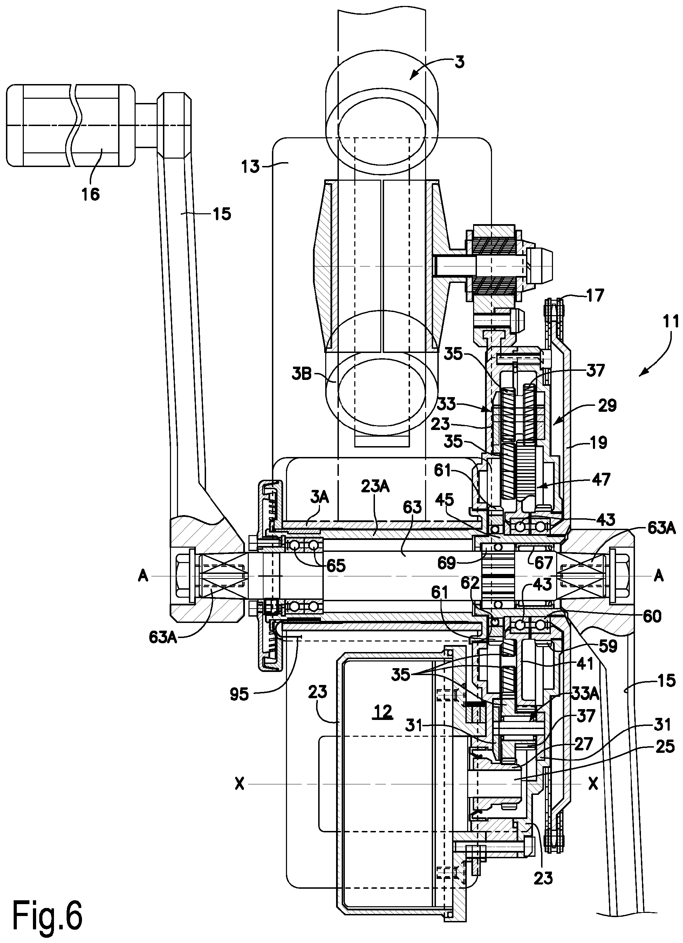

Each pair of gears 33 comprises a first gear 35 and a second gear 37, see in particular Figs. 5 and 6. The two gears 35, 37 of each pair are coaxial and integral with each other and can be made in a single piece. Each pair of gears 33 is supported idly on the annular support 31. In this way, each pair of gears 33 is rotatably supported on the annular support 31. As can be seen in the drawing, each pair of gears 33 in practice has a shaft and is associated with support bearings for rotatably supporting the pair of gears on the annular support 31. The axis of each pair of gears 33 is stationary with respect to the annular support 31.

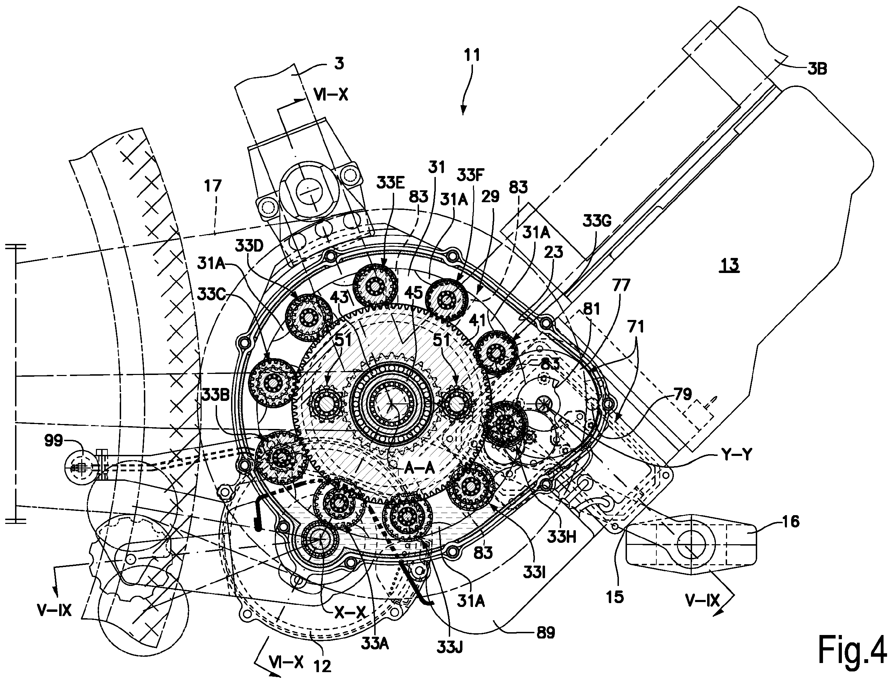

The first gears 35 of all the pairs of gears 33 are mutually coplanar and similarly the second gears 37 of all the pairs of gears 33 are mutually coplanar. More specifically, the first gears 35 are arranged on a plane, orthogonal to the axis of rotation A-A of the annular support 31, positioned in such a way that each first gear 35 can selectively mesh with the pinion 27 keyed on the shaft 25 of the motor 12. In the position illustrated in Fig. 4, the first gear 35 of the gear pair 33A meshes with the pinion 27. By rotating the annular support 31 around the axis A-A it is possible to selectively bring the first gear 35 of any one of the pairs of gears 33 into mesh with the pinion 27.

The plane on which the second gears 37 are arranged is positioned in such a way that the second gears 37 mesh with a first ring gear 41 rotating about the axis A-A. In the illustrated embodiment, the position of the annular support 31, the gear pairs 33 and the first ring gear 41 is such that the second gears 37 of all the gear pairs 33A-33J are simultaneously meshed with the first ring gear 41, as visible in particular in Fig. 4.

The first ring gear 41 is supported to rotate idly about the axis A-A by a bearing 43. The latter is placed between the first ring gear 41 and a hollow shaft 45 which, as will be explained later, constitutes the output shaft of the gearbox 29 and of the powertrain 11. The output shaft 45 rotates around the axis A-A and is integral with the chainring 19, to transmit motion to the chain 17. The first ring gear 41 constitutes an element of an epicyclic gearing indicated as a whole with 47, which receives the motion from the pinion 27, through one of the pairs of gears 33A-33J and, with a suitable reduction ratio, transmits it through the output shaft 45 to the chainring 19. The axis A-A constitutes the axis of the epicyclic gearing, around which the components thereof rotate, described in detail below.

The first ring gear 41 forms the planet carrier of the epicyclic gearing 47. Two planets 51 are idle supported on the planet carrier consisting of the first ring gear 41. The number of planets 51 may be different from that shown. In simplified embodiments, a single planet 51 is sufficient. The use of two or more planets allows for a better distribution of the forces involved.

Each planet 51 comprises (see Fig. 5) a first toothed wheel 53 and a second toothed wheel 55. The two toothed wheels 53, 55 of each planet 51 are coaxial and angularly integral with each other to rotate together about their own axis. Each planet 51 is idly supported, by means of bearings 57, on the planet carrier constituted by the first ring gear 41. The first toothed wheel 53 of each planet 51 meshes with a second ring gear 59, coaxial to the first ring gear 41. The second ring gear wheel 59 constitutes a sun wheel of the epicyclic gearing 47 and is fixed with respect to the housing 23 and therefore to the frame 3 of the bicycle 1. A bearing 60 is arranged coaxially with the second ring gear 59, which forms a radial bearing for the hollow output shaft 45.

Therefore, when the first ring gear 41, constituting the planet carrier of the epicyclic gearing 47, rotates around the axis A-A, the axes of the planets 51 rotate around the axis A-A and the first toothed wheel 53 of the planets 51 rolls on the second ring gear 59.

The second toothed wheel 55 of each planet 51 meshes with a third ring gear 61, coaxial to the first ring gear 41 and to the second ring gear 59. The third ring gear 61 constitutes a sun wheel of the epicyclic gearing 47 and is coaxial with the axis A-A. While the second ring gear 59 is fixed with respect to the housing 23, the third ring gear 61 is rotatably supported about the axis A-A.

In general, the third ring gear 61 is mechanically connected to the hollow output shaft 45 to transmit thereto the rotational motion generated by the motor 12. In some embodiments (not shown) the third ring gear 61 can be keyed to the output shaft 45. Conversely, in the illustrated embodiment, the mechanical connection between the third ring gear 61 and the output shaft is obtained with the interposition of a free wheel 62 (see Figs. 5, 6), for the purposes explained below.

When the planet carrier constituted by the first ring gear 41 rotates around the axis A-A of the epicyclic gearing 47, the second toothed wheels 55 transmit to the third ring gear 61 the rotation motion with the reduction defined by the epicyclic gearing 47 and the third ring gear 61, through the hollow output shaft 45 the motion is transmitted to the gearbox 19 and from this, through the chain 17, to the rear driving wheel 5.

In general, the vehicle 1 could be an electric motor vehicle, which moves exclusively by means of the power supplied by the motor 12. In this case the free wheel 62 could be replaced by a fixed torsional coupling between the output shaft 45 and the third ring gear 61. Also, the output shaft 45 may be solid rather than hollow.

In the illustrated embodiment, on the other hand, the vehicle 1 is an assisted pedal bicycle, in which the forward motion can also be obtained through the user's muscular force, through the pedal cranks 15 and the pedals 16. The two pedal cranks 15 are fixed to the ends 63A of a pin 63, the axis whereof coincides with the rotation axis A-A of the components of the epicyclic gearing 47 and of the annular support 31. The pin 63 will be referred to hereinafter as auxiliary shaft, as it constitutes a transmission shaft of a driving torque generated by muscular force, which can be exploited in addition to or in place of the driving torque transmitted by the drive shaft 25 to make the vehicle 1 move forward. The auxiliary shaft or journal 63 is supported for rotation within the bush 23A, by means of bearings 65. The auxiliary shaft passes through the hollow output shaft 45 and is supported therein by means of a bearing 67, such as a needle roller bearing. In this way the auxiliary shaft 63 and the output shaft 45 can rotate with respect to each other about the common axis A-A.

The auxiliary shaft 63 and the hollow output shaft 45 are, however, connected to each other by a second free wheel 69, so that under certain conditions the hollow shaft 45 can rotate freely around the auxiliary shaft 63 and in other conditions the auxiliary shaft 63 can rotate the hollow output shaft 45.

The assembly of the motor 12, the gearbox 29 and the bottom bracket comprising the auxiliary shaft 63 and the pedal cranks 15 with the pedals 16 operates as follows. By rotating the annular support 31, the desired transmission ratio can be set manually or automatically, by selecting the pair of gears 33 necessary to obtain the transmission ratio. The driving torque generated by the motor 12 is transmitted to the gearbox 19 and from this to the rear driving wheel 5 through the preselected pair of gears 35, 37, which are in the angular take-off position of motion, i.e. in the active position, with the respective first gear 35 meshing with the pinion 27. The torque is transmitted via the second gear 37 to the first ring gear 41 (constituting the planet carrier of the epicyclic gearing47) and from this, via the gear wheels 53, 55, to the third ring gear 61. If the auxiliary shaft 63 is stationary or rotates at an angular speed lower than the angular speed of the third toothed wheel 61, the motion is transmitted by the latter, through the first free wheel 62, to the output shaft 45 and therefore to the gearbox 19.

The second free wheel 69 allows the output shaft 45 to rotate about the auxiliary shaft 63 and exceed it in angular speed.

If, by means of the pedal cranks 15 and the pedals 16, the user rotates the auxiliary shaft 63 at an angular speed greater than the angular speed of the third ring gear 61, the auxiliary shaft 63 is torsionally coupled to the output shaft 45 by the second free wheel 69 and the two shafts 63, 45 rotate together, while the first free wheel 62 torsionally releases the auxiliary output shaft 45 with respect to the third ring gear 61, allowing the shaft 45 to rotate faster than the third ring gear 61.

The transmission ratio between the electric motor 12 and the output shaft 45 can be changed by rotating the annular support 31 in steps, so as to bring one of the several pairs of gears 33A-33J, idly supported on the annular support 31, into the active position, i.e. into the motion take-off position (in which, in the drawings, the pair of gears 33A is positioned).

It can be understood, from what has been described up to now, that the powertrain 11 can be easily integrated into a newly constructed bicycle, or used as a retrofit for upgrading an existing bicycle. In fact, the entire set of parts ( motor, gearbox including the epicyclic gearing) can be housed on a normal existing bicycle frame, without modifications. The seat 3A normally provided in the frame 3 to house the traditional bottom bracket of the bicycle can house the bush 23A of the seat 23 without modifications.

Therefore, the powertrain 11 can be used to convert a traditional bicycle into an assisted pedal bicycle, with an automatic or manual gear changing system. In particular, as described in greater detail below, the powertrain 11 can be provided with a control unit and appropriate sensors, through which a driving mode can be set so that the control unit controls the gearbox and manages the flow of power in appropriate manner.

The rotation of the annular support 31 in order to set the desired transmission ratio can be obtained manually with a suitable mechanism for transmitting the movement from a lever or control knob placed on the handlebar, to the annular support 31. However, in preferred embodiments, in order to facilitate the transmission ratio changing operations and possibly to carry them out automatically by means of a control unit, the gearbox can comprise a device for rotating the annular support 31, indicated as a whole with reference numeral 71. The rotation device can be made as described in US2019/0368579 (WO2018095910), which disclose embodiments of rotation devices.

In the illustrated embodiment, the rotation device 71 comprises an actuator, for example an electric motor 73, which rotates a shaft 75 on which an axis 80 integral with a shaped disc 77 is keyed about an axis Y-Y. The latter cooperate with the annular support 31 through a pin 79 and two cams in the shape of a crescent or semicircle 81. The pin 79 is adapted to fit into radial grooves 83 of the annular support 31, while the semicircles 81 are adapted to cooperate with recesses of complementary shape 31A made on the rings which form the annular support 31. The annular support 31 comprises, on each of the two rings which compose it, a number of recesses 31A equal to the number of gear pairs 33A-33J and a number of radial grooves 83 equal to the number of gear pairs 33A-33J. Each rotation of the shaped disc 77 causes the annular support 31 of the gearbox 29 to rotate by one pitch, and therefore the replacement in the meshing position with the pinion 27 of a pair of gears 33 with the adjacent pair of gears. An absolute encoder 85 mechanically connected to the shaft 75 via a gear chain 87 with a suitable transmission ratio, keeps memory of the angular position of the disc 77 and therefore of the angular position of the annular support 31, even in the event of a power cut. In this way it is possible for a central control unit 89 to always have information on which transmission ratio has been engaged, i.e. which of the various pairs of gears 33 is in the active position of meshing with the pinion 27.

Since the gear change operation requires a complete rotation of the disc 77 around the axis Y-Y, in some embodiments a sensor 91 is provided, for example a Hall sensor cooperating with a magnet 93 integral with the disc 77, through which sensor the central control unit 89 is able to verify that a gear change operation has been completed.

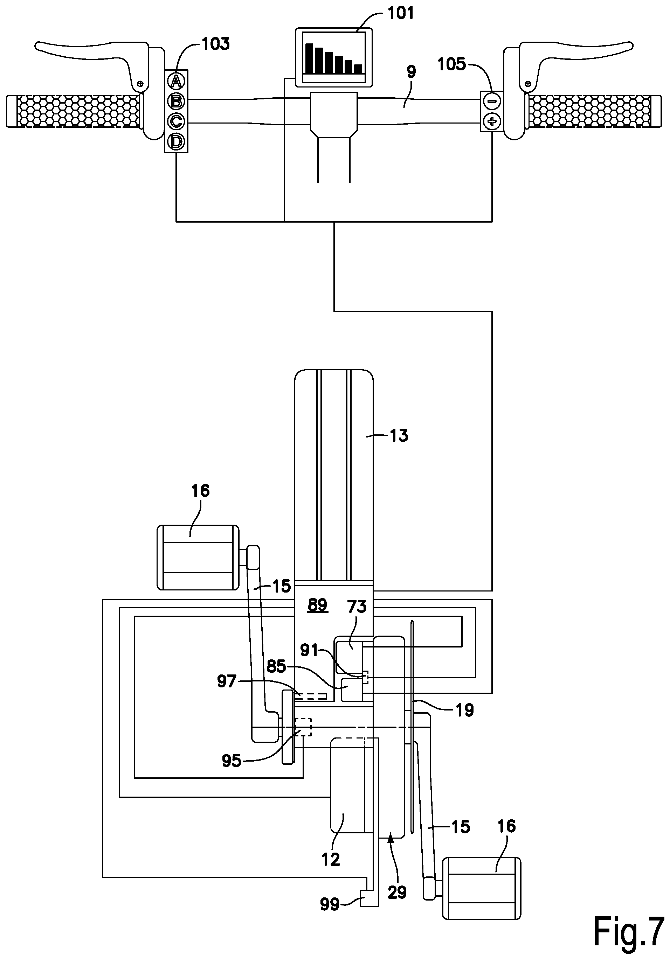

Fig. 7 schematically illustrates the sensors and the central control unit 89 for managing the vehicle 1. This figure shows the absolute encoder 85, which identifies the engaged gear, the sensor 91, the gear change actuator 73, a force sensor 95 which detects the force applied by the user on the pedal cranks 15, an angular speed sensor 97 for detecting the angular speed of the auxiliary shaft 63 and of the pedal cranks 15, a speed sensor 99 for detecting the speed the vehicle 1, and the electric energy accumulator 13.

The following members can be arranged on the handlebar 9: a monitor or display 101, a set of buttons or other interface 103 for setting the vehicle advancement system management mode, a second interface 105 for setting the transmission ratio in a non-automatic manner, if desired.

With the arrangement of the electrical and electronic components described above, it is possible to implement a series of management methods for the electric motor 12 and the gearbox 29. Management of the performance and type of operation of the powertrain 11 can be performed by the central control unit 89, which constitutes the central node of the network of connections between the various electrical devices, indicated in Fig. 7 and referred to above. Performance can be managed through different command and control modes, some examples of which follow, without claiming to be complete.

According to a possible manual management method, the transmission ratios are selected manually by acting on the gearbox 29, with the possibility of free choice of the available ratios. The ratio set is detected by the absolute encoder 85 and shown on the display 101. This manual control can be associated with the possibility of manually choosing between several constant performance levels of the motor 12. These performance levels can also be indicated on the display 101. In this type of manual management of the motor 12 and gearbox 29, the energy input into the device via the auxiliary shaft 63 adds up to the energy input from the electric motor 12 and together they contribute to determining the forward speed of the vehicle 1, up to achievement of the maximum permitted speed, making use of a constant torque chosen by the user and generated by the motor 12. The power supply to the motor 12 is progressively reduced and finally cut off when the vehicle reaches the maximum permitted speed, detected by the speed sensor 99.

According to a different, semi-automatic management method, the gearbox 29 can be operated automatically and this can be combined with a manual selection of the constant torque level delivered by the electric motor 12, with the possibility of choosing several motor performance levels, indicated on the displays 101. In this semi-automatic command and control mode, the automatic management of the gearbox 29 depends on the results of an algorithm which tends to reach the maximum permitted speed of the vehicle 1, within the limits of what is made possible by the drive torque limit set by the user for the electric motor 12 and processing the data flowing to the central control unit 89, in particular: rotation speed of the electric motor 12, speed of the vehicle 1, current absorption of the electric motor 12. For this purpose, the electric motor 12 can be associated with respective sensors, such as in particular a speed sensor, interfaced with the central control unit 89.

In some embodiments, the electric motor 12 may be a brushless motor. In embodiments, the motor 12 can per se already be provided with all the necessary sensors, i.e. in particular with a speed sensor. In the diagram of Fig. 7 the motor speed sensor is not indicated, being incorporated in the motor itself, i.e. forming an integral part of the instrumentation of the motor 12.

According to a further semi-automatic management method, the reverse of the previous case can be provided, i.e. automatic management of the level of torque delivered by the electric motor 12 and manual control of the gearbox 29, with the same automatism purposes as those just described.

According to yet another automatic management mode, an automatic control of the gearbox 29 and of the electric motor 12 can be provided through algorithms run on the central control unit 89, which can for example favor the saving of electric energy. In this fully automatic command and control mode, a specific algorithm processes the data flowing to the central control unit 89, through the aforementioned sensors, and returns the information useful for the gearbox command and control of the electric motor 12, with compensatory management mode of the mechanical energy delivered to the device through the two distinct input routes: pedals 16 and motor 12. This mode makes the energy values delivered to the device through the auxiliary shaft 63 and the pedal cranks 15 and that introduced through the electric motor 12 complementary, with priority of the energy coming from the auxiliary shaft, keeping the sum of the two energies always equal to a total of energy delivered to the device, established by the user through the selection of the desired energy level, chosen in a pre-established scale.

The share of energy and therefore of power of the motor 12 has a maximum allowed by the standards or by the manufacturer of the device and the management of the motor operates within this value, with a further limit established through the operating mode set by the user, as described above.

In essence, with manual or semi-automatic management methods, the user or the central control unit applies a constant torque level to the motor 12 and the maximum permitted power limit possibly reached is controlled by the central control unit 89, while with the fully automatic mode, the performance of the motor 12 fluctuates between zero and the maximum possible/allowed, both in torque and in power, subject to the level of performance chosen by the user and to the muscle torque applied.

In this last fully automatic mode, a greater quantity of energy coming from the pedal cranks 15 corresponds to a smaller quantity of energy coming from the electric motor 12, up to the limit condition of energy totally introduced through the pedaling action.

The fully automatic management mode, in addition to the aforementioned balancing action of the energy sources, pursues the aim of maximizing the autonomy of the vehicle through the selection of the gear transmission ratios, suitably chosen so as to keep the motor 12 on a rotation regime close to the regime of maximum efficiency and consequent minimum energy consumption.

As explained above, the automatic command and control mode requires the data on energy entered via the auxiliary shaft 63. For this reason, the force sensor 95 is provided, which detects the force exerted on the auxiliary shaft 63 through the pedal cranks 15. The output data from the force sensor 95, together with the value of the rotation speed of the auxiliary shaft 63, detected by the speed sensor 97, allows the value of the energy supplied by the muscular route to be calculated.

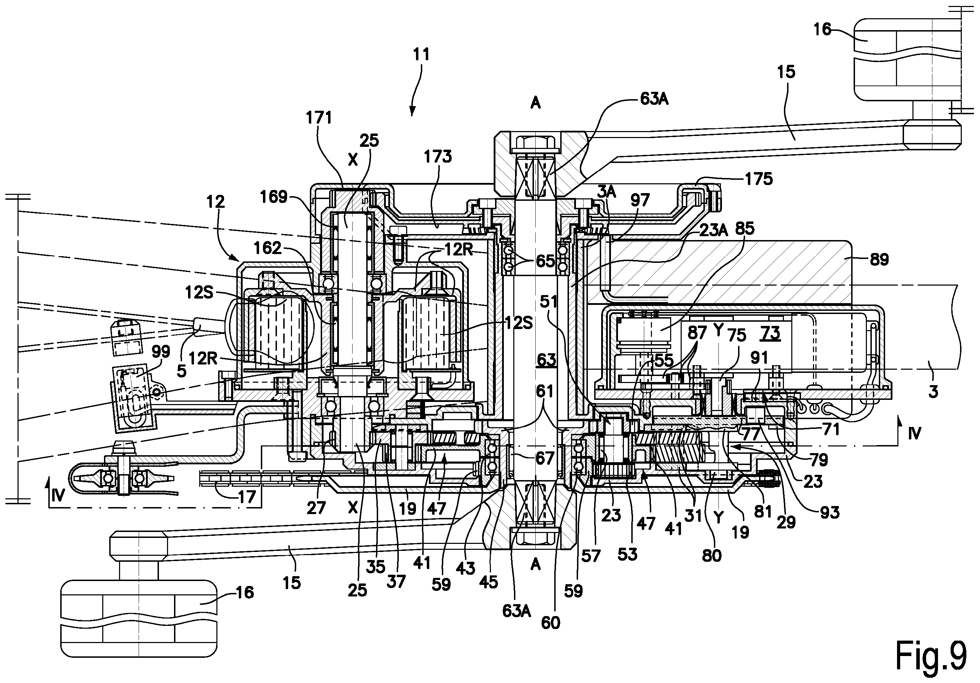

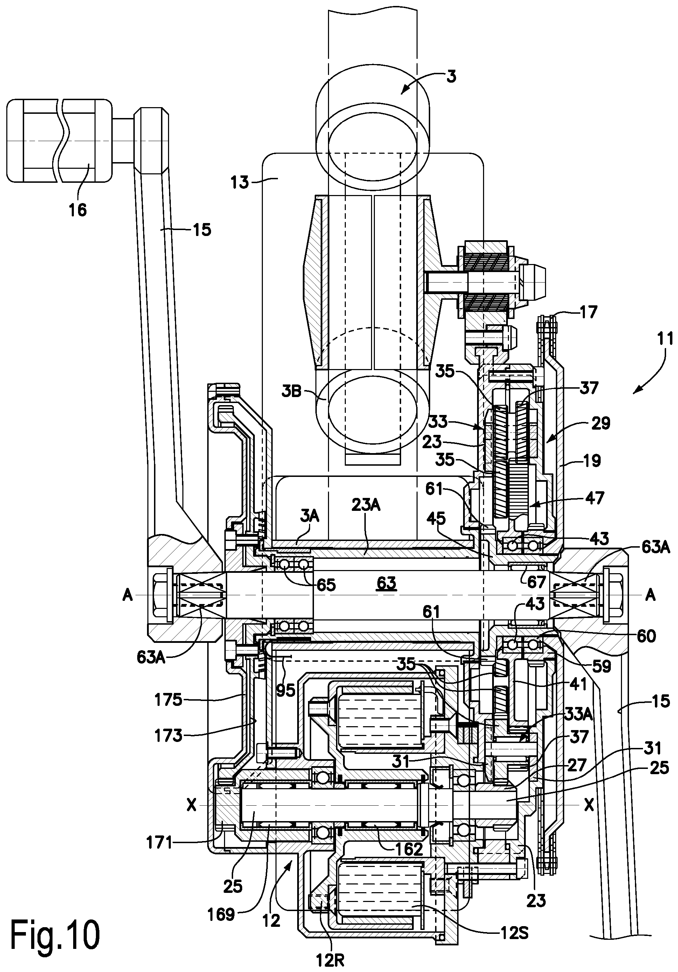

A further embodiment of the gearbox according to the present invention is shown in Figs. 8, 9 and 10. Figs. 4 and 7 show parts which are also the same in the further embodiment. Like numbers indicate parts that are the same or equivalent to those described with reference to Figs. 1 to 7, which will not be described again in detail.

The embodiment of Figs. 8 to 10 differs from the embodiment of Figs. 1 to 7 mainly due to the different way in which the muscular power generated by the user through the pedal cranks 15 and the pedals 16 is introduced into the powertrain.

In the embodiment of Figs. 8 to 10, the auxiliary shaft 63 is supported within the hollow output shaft 45 and bush 23A by bearings 65 and 67, but connection by the second free wheel 69 is not provided. Furthermore, the third ring gear 61 is directly keyed to the hollow output shaft 45 and rotates integrally therewith whatever the rotational speed of the motor 12 and of the pedal cranks 15. In practice, in the embodiment of Figs. 8 to 10 by way of example, the third ring gear 61 is made in one piece with the hollow output shaft 45.

The transmission of the torque generated by the muscular force applied by the user through the pedal cranks 15 takes place through the motor 12. In this embodiment, in fact, a first free wheel/bearing 162 is keyed onto the drive shaft, still indicated with 25, interposed between the drive shaft 25 and a rotor 12R of the electric motor 12, of which 12S schematically indicates the stator. A second free wheel/bearing 169 is keyed onto the shaft 25, interposed between the drive shaft 25 and an auxiliary gear 171 coaxial to the drive shaft 25. The auxiliary gear 171 meshes with an auxiliary ring gear 173, keyed to the auxiliary shaft or pin 63 which receives the motion from the pedal cranks 15. The auxiliary ring gear 173 is housed in a protective casing 175.

The members described above allow the motion of the pedal cranks 15 and of the auxiliary pin or shaft 63 to be combined with the motion imparted by the motor 12 in the following manner. When the pedal cranks 15 rotate due to the thrust applied by the user's muscular force, the auxiliary shaft 63 rotates around the axis A-A and the rotation is transmitted via the auxiliary ring gear 173 and the auxiliary gear 171 to the free wheel/bearing 169. This transmits the movement from the auxiliary gear 171 to the drive shaft 25 if the angular speed impressed on the auxiliary gear 171 is greater than the angular speed of the rotor 12R of the motor 12. In these conditions, the torque is transmitted through the second free wheel/bearing 169 and the shaft 25 to the pinion 27, while the first free wheel/bearing 162 releases the rotation of the rotor 12R.

If, on the other hand, the angular speed of the rotor 12R of the motor 12 is higher than the angular speed impressed by the pedal cranks 15 on the auxiliary gear 171, the second free wheel/bearing 169 angularly disengages the auxiliary gear 171 from the drive shaft 25 and the first free wheel/bearing 162 transmits the torque from the rotor 12R to the drive shaft 25 and from there to the pinion 27.

In essence, the embodiment of Figs. 8 to 10 operates in the same manner as the embodiment of Figs. 1 to 7 when the angular speed of the motor 12 exceeds the angular speed of the auxiliary gear 171. Conversely, when the speed imparted by the user through the pedal cranks 15 is such that the angular speed of the auxiliary gear 171 exceeds the angular speed of the motor, the muscular power no longer passes directly from the pin or auxiliary shaft 63 directly to the hollow shaft output gear 45, but through the following kinematic chain: auxiliary ring gear 173, auxiliary gear 171, drive shaft 25, pinion 27 and gearbox 29 up to the output shaft 45 and from there to the chainring 19.

From a point of view of mechanical efficiency, the embodiment of Figs. 8 to 10 is less advantageous than the embodiment of Figs. 1 to 7, since part of the muscular power is dissipated in the above-described kinematic chain, from the pin or auxiliary shaft 63 to the output shaft 45, passing through the drive shaft 25 and the gearbox 29 with the relative reducer consisting of the epicyclic gearing 47. On the other hand, the embodiment of Figs. 8 to 10 has the advantage that the user can change the transmission ratio by means of the gearbox 29 even when using the vehicle 1 without using the power of the motor 12, but only by pedaling.

In both embodiments described, the annular support 31 with the pairs of gears, which constitute the movable elements of the transmission ratio change, are placed upstream and not downstream of the reducer and therefore at low torque, differently from other transmissions for similar uses, which reduces the stresses applied to the moving components of the transmission.

The described device, provided with an electric motor 12, can be used both as OEM equipment of the vehicle and as a retrofit upgrading part for vehicles already equipped, or not equipped, with traditional gearbox devices with multiple chainrings and pinions. In fact, the device described here can be configured in such a way as to allow it to be mounted on standard frames to replace any other possible component of the transmission of motion to the wheel. It thus becomes possible to convert these vehicles into pedal assisted vehicles, or more generally assisted propulsion or assisted traction vehicles.

The device described herein, unlike traditional gearboxes, does not require any adjustment, either upon installation on the vehicle or during use. It therefore does not require particular skills from the installer and above all from the user.

Maintenance is very limited, limited to periodic checks of the oil level in the gearbox (of which, however, there is no consumption) and to cleaning and lubricating the chain 17.

In some embodiments, the chain 17 can advantageously be replaced by a toothed belt or other continuous flexible member, thus obtaining a further reduction in vehicle maintenance. The possibility of transmitting motion to a shaft transmission member with a possible suitable transmission joint is not excluded.

The maximization of the qualities of duration and reliability makes the system suitable for use on vehicles which are used intensively, which require the functioning safety of the entire motion transmission apparatus. Think, for example, of vehicles such as cycle taxis, tricycles, quadricycles, torpedoes, urban rickshaws, cyclecargos. These vehicles, in addition to requiring reliability, do not allow easy access to the mechanical transmission to make repairs or intervene during use in the case of simple escape of the chain, as often happens in traditional transmission systems.

Furthermore, the chain 17, running constantly aligned, i.e. always lying on the same plane of arrangement of the pinion of the drive wheel and of the chainring 19, is not affected by problem of premature wear, typical instead of systems with a derailleur. The chain 17 can therefore be a chain of greater width than the chains traditionally used in vehicles with derailleur gears. This further increases the duration of operation and minimizes the need for interventions to replace worn parts.

This results in normal very long-term wear of the chain drive (chainring 19, chain 17, sprocket 21). Furthermore, the progression of wear of this transmission does not affect the proper functioning of the gear changing process, as instead occurs in traditional derailleur systems, in which the chain rapidly loses its transversal rigidity following wear, also compromising the correct functioning of the gear change.

The described system has a weight reduced to a minimum especially due to the use of a small electric motor, due to the presence of the gearbox, but of sufficient power although generated at a relatively low speed, with a further positive effect on the complexity, weight and performance of the gearbox/reducer system.

A further advantage is offered by the placement of the motor 12 under the bottom bracket of the vehicle (i.e. at a height lower than the axis A-A) with a considerable improvement in the dynamic features and handling of the vehicle 1, determined by the consequent lower position of the center of gravity of the entire vehicle.

To maximize the dynamic features of the vehicle, it is advantageous to place the central control unit 89 and above all the battery 13 under the oblique tube 3B (Fig. 1) of the frame 3, thus positioning the center of gravity at the minimum possible height.

The assembly consisting of the gearbox with relative reducer is particularly advantageous when used for the propulsion of vehicles, especially, but not exclusively, bicycles or other saddle vehicles. In advantageous embodiments, such as those described, the gearbox and respective reducer can be used with particular advantage in the case of assisted traction or propulsion vehicles, by virtue of the easy integration of the gearbox-reducer system in a vehicle equipped with a pedal crank bottom bracket for traction by muscle force. However, the possibility of using the gearbox with relative reducer is not excluded, for other uses, where for example the combination of the motion supplied by a first power source, consisting of the motor 12 or other, which transmits motion to the pair of gears 33, with motion provided by an auxiliary source via an auxiliary shaft 63, can also be envisaged.

## Claims

1. A gearbox (29) comprising:
a) an annular support (31), on which pairs of gears (33A-33J) for the input of motion to the gearbox (29) are rotatably and idly supported, the axis of each pair of gears being stationary with respect to the annular support; wherein:
each pair of gears (33A-33J) comprises a first gear (35) adapted to receive an input motion, and a second gear (37); the first gear (35) and the second gear (37) being coaxial and angularly coupled to each other to rotate integrally;
each pair of gears (33A-33J) defines a transmission ratio different from the transmission ratios defined by the other pairs of gears;
the annular support (31) is angularly movable around a selection axis to selectively bring one of said pairs of gears (33A-33J) into an angular take-off position of the motion to the gearbox (29);
b) a mechanical connection between the second gear (37) of the pair of gears (33A-33J) which is in the angular take-off position of the motion to the gearbox (29), and an output shaft (45) having an axis of rotation (A-A) parallel to the selection axis or coincident therewith; wherein the output shaft (45) passes inside the annular support (31);
**characterized in that** the mechanical connection comprises a reducer (47) or a multiplier; and wherein the reducer (47) or the multiplier comprises a first ring gear (41) meshing with at least the second gear (37) of the pair of gears (33A-33J) which is in the angular take-off position of the motion in input to the gearbox (29).

2. The gearbox (29) of claim 1, wherein the first gears (35) of the pairs of gears (33A-33J) and the annular support (31) are arranged such that the first gear (35) of the pair of gears (33A-33J) which is in the angular take-off position of the motion is positioned to receive the input motion peripherally from a pinion (27) of a drive member (12), said pinion (27) being external to the annular support (31).

3. The gearbox (29) of claim 1 or 2, wherein the annular support is adapted to rotate about the selection axis without limitation to the angle of rotation.

4. The gearbox (29) of one or more of the preceding claims, wherein the first ring gear (41) has an external toothing and a rotation axis passing inside the annular support (31), parallel to the selection axis or coinciding therewith.

5. The gearbox (29) of one or more of the preceding claims, wherein the annular support (31) and the first ring gear (41) have parallel or coincident axes; and wherein the first ring gear (41) meshes with the second gears (37) of each pair of gears (33A-33J) in any angular position of the annular support (31).

6. The gearbox (29) of one or more of the preceding claims, wherein the reducer (47) comprises an epicyclic gearing; wherein the first ring gear (41) constitutes a planet carrier of the epicyclic gearing (47), which rotates around a central axis of the epicyclic gearing (47), coinciding with the axis of the output shaft (45); and wherein at least one planet (51) is idly supported on the planet carrier and comprises a first toothed wheel and a second toothed wheel, angularly integral and coaxial to each other.

7. The gearbox (29) of claim 6, wherein the first toothed wheel (53) of the planet (51) meshes with a second ring gear (59), fixed with respect to a bearing structure and coaxial to the first ring gear (41); wherein the second toothed wheel (55) of the planet (51) meshes with a third ring gear (61), rotatable around the axis of the output shaft (45); and wherein a mechanical coupling is arranged to transmit motion from the third ring gear (61) to the output shaft (45).

8. The gearbox (29) of one or more of the preceding claims, comprising a device (71) for rotating the annular support (31), adapted to selectively bring the annular support (31) into a plurality of angular positions, in each angular position one of said pairs of gears being in the angular take-off position of the motion to the gearbox (29).

9. The gearbox (29) of claim 7, wherein the mechanical coupling between the third ring gear (61) and the output shaft (45) comprises a first free wheel (62); and wherein preferably the output shaft (45) is a hollow shaft and an auxiliary shaft (63) for the input of motion from an auxiliary motion source extends coaxially to the output shaft (45), a second free wheel (69) being arranged between the hollow output shaft (45) and the auxiliary shaft (63).

10. A powertrain (11) for a vehicle, wherein the powertrain comprises:
a motor (12) having a drive shaft (25) with a pinion (27); and
a gearbox (29) according to one or more of the preceding claims;
wherein the annular support (31) of the gearbox (29) is positioned so as to bring into mesh with the pinion (27) selectively one of the first gears (35) of said pairs of gears (33A-33J), according to the transmission ratio requested, through a rotation of the annular support (31) around the selection axis; and wherein the pinion comprises an axis of rotation external to the annular support (31), so that the motion is input into the gearbox peripherally via the first gear (35) of the pair of gears (33A-33J), which is in the angular take-off position of the motion to the gearbox.

11. The powertrain (11) of claim 10, wherein the gearbox (29) is according to one or more of claims 1 to 8; wherein the motor (12) is an electric motor comprising a stator (12S) and a rotor (12R); wherein a first free wheel (162) is interposed between the rotor (12R) and the drive shaft (25); and wherein a second free wheel (169) interposed between the drive shaft (25) and an auxiliary gear (171) coaxial to the drive shaft (25) and adapted to receive a torque from an auxiliary source is keyed onto the drive shaft (25).

12. The powertrain (11) of claim 11, wherein the auxiliary gear (171) meshes with an auxiliary ring gear (173) keyed on an auxiliary shaft (63); wherein preferably the auxiliary shaft (63) is coaxial with the axis of the output shaft; wherein the auxiliary shaft is preferably rotatably supported within the output shaft (45); and wherein, at opposite ends of the auxiliary shaft (63), members (15, 16) for applying muscle force to the auxiliary shaft (63) are preferably keyed.

13. A vehicle (1) comprising:
a frame (3);
at least one driving wheel (5);
at least one steered wheel (7);
a motor (12) comprising a drive shaft (25) with a pinion (27) rotated by the drive shaft;
a gearbox (29) interposed between the motor (12) and the driving wheel (5); said gearbox being configured according to one or more of claims 1 to 9;
wherein the pinion (27) of the drive shaft (25) is placed outside the annular support (31) of the gearbox; and wherein the annular support (31) is adapted to take a plurality of angular positions, such that in each angular position a respective one of said pairs of gears (33A-33J) is in active position, with the respective first gear (35) in take-off with the pinion (27) of the drive shaft.

14. The vehicle (1) of claim 13, wherein the vehicle is an assisted power vehicle, comprising an auxiliary shaft (63), on which members (15, 16) for applying a muscular force to the auxiliary shaft (63) are keyed; and wherein the auxiliary shaft is connected, via a system including free wheels, to the output shaft (45).

15. The vehicle (1) according to claim 14, wherein:
the motor (12) is an electric motor comprising a stator (12S) and a rotor (12R);
said gearbox is configured according to one or more of claims 1 to 8;
the system comprising free wheels comprises: a first free wheel (162) interposed between the rotor (12R) and the drive shaft (25); a second free wheel (169) keyed on the drive shaft (25) and interposed between the drive shaft (25) and an auxiliary gear (171) coaxial to the drive shaft (25), meshing with an auxiliary toothed wheel (173) keyed on the auxiliary shaft (63); and
the auxiliary shaft (63) is coaxial to the axis of the output shaft (45) and rotatably supported inside the output shaft (45).

16. The vehicle (1) of one or more of claims 13 to 15, wherein the vehicle is a bicycle comprising a bottom bracket, and wherein the output shaft (45) is coaxial to the bottom bracket.

17. A method of converting a human powered vehicle (1) into an assisted power vehicle, comprising the step of inserting a powertrain according to one or more of claims 10 to 12 into a torque transmission line to a driving wheel (5) of the vehicle (1); in particular wherein the vehicle (1) is a bicycle, and the powertrain is substituted for a bicycle bottom bracket.

## Patentansprüche

1. Ein Getriebe (29) umfassend:
a) einen ringförmigen Träger (31), auf dem Zahnradpaare (33A-33J) zur Bewegungsübertragung auf das Getriebe (29) drehbar und frei gelagert sind, wobei die Achse jedes Zahnradpaares in Bezug auf den ringförmigen Träger feststehend ist; wobei:
jedes Zahnradpaar (33A-33J) ein erstes Zahnrad (35), das zur Aufnahme einer Eingangsbewegung eingerichtet ist, und ein zweites Zahnrad (37) umfasst; wobei das erste Zahnrad (35) und das zweite Zahnrad (37) koaxial und winklig miteinander gekoppelt sind, um sich als Einheit zu drehen;
jedes Zahnradpaar (33A-33J) ein Übersetzungsverhältnis definiert, das sich von den durch die anderen Zahnradpaare definierten Übersetzungsverhältnissen unterscheidet;
der ringförmige Träger (31) um eine Auswahlachse winkelig bewegbar ist, um eines der genannten Zahnradpaare (33A-33J) selektiv in eine winklige Aufnahmeposition der Bewegung zum Getriebe (29) zu bringen;
b) eine mechanische Verbindung zwischen dem zweiten Zahnrad (37) des Zahnradpaares (33A-33J), das sich in der winkligen Aufnahmeposition der Bewegung zum Getriebe (29) befindet, und einer Abtriebswelle (45) mit einer Drehachse (A-A), die parallel zur Auswahlachse verläuft oder mit dieser zusammenfällt; wobei die Abtriebswelle (45) innerhalb des ringförmigen Trägers (31) verläuft;
**dadurch gekennzeichnet, dass** die mechanische Verbindung ein Untersetzungsgetriebe (47) oder ein Übersetzungsgetriebe umfasst; und wobei das Untersetzungsgetriebe (47) oder das Übersetzungsgetriebe ein erstes Zahnkranzrad (41) umfasst, das mit mindestens dem zweiten Zahnrad (37) des Zahnradpaares (33A-33J) kämmt, das sich in der winkligen Aufnahmeposition der Bewegung am Eingang zum Getriebe befindet.

2. Das Getriebe (29) nach Anspruch 1, wobei die ersten Zahnräder (35) der Zahnradpaare (33A-33J) und der ringförmige Träger (31) so angeordnet sind, dass das erste Zahnrad (35) des Zahnradpaares (33A-33J), das sich in der winkligen Aufnahmeposition der Bewegung befindet, so positioniert ist, dass es die Eingangsbewegung am Umfang von einem Ritzel (27) eines Antriebselements (12) aufnimmt, wobei sich das Ritzel (27) außerhalb des ringförmigen Trägers (31) befindet.

3. Das Getriebe (29) nach Anspruch 1 oder 2, wobei der ringförmige Träger dazu eingerichtet ist, sich um die Auswahlachse ohne Begrenzung des Drehwinkels zu drehen.

4. Das Getriebe (29) nach einem oder mehreren der vorstehenden Ansprüche, wobei das erste Zahnkranzrad (41) eine Außenverzahnung und eine Drehachse aufweist, die innerhalb des ringförmigen Trägers (31) verläuft, parallel zur Auswahlachse oder mit dieser zusammenfallend.

5. Das Getriebe (29) nach einem oder mehreren der vorstehenden Ansprüche, wobei der ringförmige Träger (31) und das erste Zahnkranzrad (41) parallele oder zusammenfallende Achsen aufweisen; und wobei das erste Zahnkranzrad (41) in jeder Winkelstellung des ringförmigen Trägers (31) mit den zweiten Zahnrädern (37) jedes Zahnradpaares (33A-33J) in Eingriff steht.

6. Das Getriebe (29) nach einem oder mehreren der vorstehenden Ansprüche, wobei das Untersetzungsgetriebe (47) ein Planetengetriebe umfasst; wobei das erste Zahnkranzrad (41) einen Planetenträger des Planetengetriebes (47) bildet, der sich um eine Mittelachse des Planetengetriebes (47) dreht, die mit der Achse der Abtriebswelle (45) zusammenfällt; und wobei mindestens ein Planetenrad (51) frei auf dem Planetenträger gelagert ist und ein erstes Zahnrad sowie ein zweites Zahnrad umfasst, die winklig einstückig und koaxial zueinander angeordnet sind.

7. Das Getriebe (29) nach Anspruch 6, wobei das erste gezahnte Rad (53) des Planetenrads (51) mit einem zweiten Zahnkranzrad (59) kämmt, der in Bezug auf eine Lagerkonstruktion feststehend und koaxial zum ersten Zahnkranzrad (41) angeordnet ist; wobei das zweite gezahnte Rad (55) des Planetenrads (51) mit einem dritten Zahnkranzrad (61) in Eingriff steht, das um die Achse der Abtriebswelle (45) drehbar ist; und wobei eine mechanische Kupplung angeordnet ist, um die Bewegung vom dritten Zahnkranzrad (61) auf die Abtriebswelle (45) zu übertragen.

8. Das Getriebe (29) nach einem oder mehreren der vorstehenden Ansprüche, umfassend eine Vorrichtung (71) zum Drehen des ringförmigen Trägers (31), die dazu ausgelegt ist, den ringförmigen Träger (31) wahlweise in eine Vielzahl von Winkelpositionen zu bringen, wobei sich in jeder Winkelposition eines der genannten Zahnradpaare in der winkligen Aufnahmeposition der Bewegung zum Getriebe (29) befindet.

9. Das Getriebe (29) nach Anspruch 7, wobei die mechanische Kopplung zwischen dem dritten Zahnkranzrad (61) und der Abtriebswelle (45) einen ersten Freilauf (62) umfasst; und wobei vorzugsweise die Abtriebswelle (45) eine Hohlwelle ist und sich eine Hilfswelle (63) zur Bewegungsübertragung von einer Hilfsantriebsquelle koaxial zur Abtriebswelle (45) erstreckt, wobei ein zweiter Freilauf (69) zwischen der hohlen Abtriebswelle (45) und der Hilfswelle (63) angeordnet ist.

10. Ein Antriebsstrang (11) für ein Fahrzeug, wobei der Antriebsstrang umfasst:
einen Motor (12) mit einer Antriebswelle (25) und einem Ritzel (27); und
ein Getriebe (29) gemäß einem oder mehreren der vorstehenden Ansprüche;
wobei der ringförmige Träger (31) des Getriebes (29) so positioniert ist, dass er je nach der gewünschten Übersetzung durch eine Drehung des ringförmigen Trägers (31) um die Auswahlachse wahlweise eines der ersten Zahnräder (35) der genannten Zahnradpaare (33A-33J) mit dem Ritzel (27) in Eingriff bringt; und wobei das Ritzel eine außerhalb des ringförmigen Trägers (31) liegende Drehachse aufweist, so dass die Bewegung über das erste Zahnrad (35) des Zahnradpaares (33A-33J), das sich in der winkligen Aufnahmeposition der Bewegung zum Getriebe befindet, peripher in das Getriebe eingeleitet wird.

11. Der Antriebsstrang (11) nach Anspruch 10, wobei das Getriebe (29) gemäß einem oder mehreren der Ansprüche 1 bis 8 ausgebildet ist; wobei der Motor (12) ein Elektromotor ist, der einen Stator (12S) und einen Rotor (12R) umfasst; wobei ein erster Freilauf (162) zwischen dem Rotor (12R) und der Antriebswelle (25) angeordnet ist; und wobei ein zweiter Freilauf (169), der zwischen der Antriebswelle (25) und einem zur Antriebswelle (25) koaxialen Hilfsgetriebe (171) angeordnet ist, das dazu eingerichtet ist, ein Drehmoment von einer Hilfsquelle aufzunehmen, mit der Antriebswelle (25) verbunden ist.

12. Der Antriebsstrang (11) nach Anspruch 11, wobei das Hilfsgetriebe (171) mit einem Hilfszahnkranzrad (173) kämmt, das mit einer Hilfswelle (63) verbunden ist; wobei die Hilfswelle (63) vorzugsweise koaxial zur Achse der Abtriebswelle ist; wobei die Hilfswelle vorzugsweise drehbar innerhalb der Abtriebswelle (45) gelagert ist; und wobei an den gegenüberliegenden Enden der Hilfswelle (63) vorzugsweise Elemente (15, 16) zum Aufbringen von Muskelkraft auf die Hilfswelle (63) mit dieser verbunden sind.

13. Ein Fahrzeug (1), umfassend:
einen Rahmen (3);
mindestens ein Antriebsrad (5);
mindestens ein gelenktes Rad (7);
einen Motor (12), der eine Antriebswelle (25) mit einem von der Antriebswelle gedrehten Ritzel (27) umfasst;
ein Getriebe (29), das zwischen dem Motor (12) und dem Antriebsrad (5) angeordnet ist; wobei das Getriebe gemäß einem oder mehreren der Ansprüche 1 bis 9 ausgebildet ist;
wobei das Ritzel (27) der Antriebswelle (25) außerhalb des ringförmigen Trägers (31) des Getriebes angeordnet ist; und wobei der ringförmige Träger (31) dazu eingerichtet ist, eine Mehrzahl von Winkelpositionen einzunehmen, so dass in jeder Winkelposition jeweils eines der genannten Zahnradpaare (33A-33J) in aktiver Position ist, wobei das jeweilige erste Zahnrad (35) mit dem Ritzel (27) der Antriebswelle in Eingriff steht.

14. Das Fahrzeug (1) nach Anspruch 13, wobei das Fahrzeug ein kraftunterstütztes Fahrzeug ist, das eine Hilfswelle (63) umfasst, mit der Elemente (15, 16) zum Aufbringen von Muskelkraft auf die Hilfswelle (63) verbunden sind; und wobei die Hilfswelle über ein System, das Freiläufe umfasst, mit der Abtriebswelle (45) verbunden ist.

15. Das Fahrzeug (1) nach Anspruch 14, wobei:
der Motor (12) ein Elektromotor ist, der einen Stator (12S) und einen Rotor (12R) umfasst;
das Getriebe gemäß einem oder mehreren der Ansprüche 1 bis 8 ausgebildet ist;
das System mit Freiläufen umfasst: einen ersten Freilauf (162), der zwischen dem Rotor (12R) und der Antriebswelle (25) angeordnet ist; einen zweiten Freilauf (169), der mit der Antriebswelle (25) verbunden ist und zwischen der Antriebswelle (25) und einem zur Antriebswelle (25) koaxialen Hilfsgetriebe (171) angeordnet ist, das mit einem mit der Hilfswelle (63) verbundenen Hilfszahnrad (173) in Eingriff steht; und
die Hilfswelle (63) koaxial zur Achse der Abtriebswelle (45) verläuft und drehbar innerhalb der Abtriebswelle (45) gelagert ist.

16. Das Fahrzeug (1) nach einem oder mehreren der Ansprüche 13 bis 15, wobei das Fahrzeug ein Fahrrad ist, das ein Tretlager umfasst, und wobei die Abtriebswelle (45) koaxial zum Tretlager verläuft.

17. Ein Verfahren zum Umbau eines von Menschenkraft angetriebenen Fahrzeugs (1) in ein Fahrzeug mit Antriebsunterstützung, umfassend den Schritt des Einbaus eines Antriebsstrangs gemäß einem oder mehreren der Ansprüche 10 bis 12 in eine Drehmomentübertragungslinie zu einem Antriebsrad (5) des Fahrzeugs (1); wobei das Fahrzeug (1) insbesondere ein Fahrrad ist und der Antriebsstrang anstelle eines Fahrrad-Tretlagers eingesetzt wird.

## Revendications

1. Une boîte de vitesses (29) comprenant :
a) un support annulaire (31), sur lequel des paires d'engrenages (33A-33J) pour la communication d'un mouvement à la boîte de vitesses (29) sont supportées libres en rotation, l'axe de chaque paire d'engrenages étant stationnaire par rapport au support annulaire, dans lequel :
chaque paire d'engrenages (33A-33J) comprend un premier engrenage (35) apte à recevoir un mouvement de départ et un deuxième engrenage (37) ; le premier engrenage (35) et le deuxième engrenage (37) étant coaxiaux et couplés angulairement l'un à l'autre pour tourner solidairement ;
chaque paire d'engrenages (33A-33J) a un rapport de transmission différent des rapports de transmission des autres paires d'engrenages ;
le support annulaire (31) est mobile angulairement autour d'un axe de sélection pour mettre sélectivement l'une desdites paires d'engrenages (33A-33J) en position de prise angulaire avec le mouvement de la boîte de vitesses (29) ;
b) une connexion mécanique entre le deuxième engrenage (37) de la paire d'engrenages (33A-33J) qui est dans la position de prise avec le mouvement de la boîte de vitesses (29), et un arbre de sortie (45) ayant un axe de rotation (A-A) parallèle à l'axe de sélection ou coïncidant avec celui-ci ; l'arbre de sortie (45) passant à l'intérieur du support annulaire (31) ;
**caractérisé en ce que** la connexion mécanique comprend un réducteur (47) ou un multiplicateur ; le réducteur (47) ou le multiplicateur comprenant un premier engrenage annulaire (41) engrenant au moins avec le deuxième engrenage (37) de la paire d'engrenages (33A-33J), laquelle est en position de prise angulaire avec le mouvement à communiquer à la boîte de vitesses (29).

2. La boîte de vitesses (29) selon la revendication 1, dans laquelle les premiers engrenages (35) des paires d'engrenages (33A-33J) et le support annulaire (31) sont agencés de telle sorte que le premier engrenage (35) de la paire d'engrenages (33A-33J) qui est en position de prise angulaire avec le mouvement est positionnée pour recevoir le mouvement à communiquer de manière périphérique à partir d'un pignon (27) d'un organe d'entraînement (12), ledit pignon (27) étant externe au support annulaire (31).

3. La boîte de vitesses (29) selon la revendication 1 ou 2, dans laquelle le support annulaire est apte à tourner autour de l'axe de sélection sans limitation de l'angle de rotation.

4. La boîte de vitesses (29) selon l'une ou plusieurs des revendications précédentes, dans laquelle le premier engrenage annulaire (41) comporte une denture externe et un axe de rotation passant à l'intérieur du support annulaire (31), parallèle à l'axe de sélection ou coïncidant avec celui-ci.

5. La boîte de vitesses (29) selon l'une ou plusieurs des revendications précédentes, dans laquelle le support annulaire (31) et le premier engrenage annulaire (41) ont des axes parallèles ou coïncidents ; le premier engrenage annulaire (41) engrenant avec les deuxièmes engrenages (37) de chaque paire d'engrenages (33A-33J) dans toute position angulaire du support annulaire (31).

6. La boîte de vitesses (29) selon l'une ou plusieurs des revendications précédentes, dans laquelle le réducteur (47) comprend un engrenage épicycloïdal ; le premier engrenage annulaire (41) constituant le porte-satellite de l'engrenage épicycloïdal (47), lequel tourne autour d'un axe central de l'engrenage épicycloïdal (47), coïncidant avec l'axe de l'arbre de sortie (45) ; et au moins un satellite (51) étant supporté libre en rotation sur le support planétaire et comprenant une première roue dentée et une deuxième roue dentée, solidaires angulairement et coaxiale l'une avec l'autre.

7. La boîte de vitesses (29) selon la revendication 6, dans laquelle la première roue dentée (53) du satellite (51) engrène avec un deuxième engrenage annulaire (59), fixe par rapport à une structure de support et coaxial avec le premier engrenage annulaire (41) ; la deuxième roue dentée (55) du satellite (51) engrenant avec un troisième engrenage annulaire (61), pouvant tourner autour de l'axe de l'arbre de sortie (45) ; et un couplage mécanique étant agencé pour transmettre un mouvement du troisième engrenage annulaire (61) à l'arbre de sortie (45).

8. La boîte de vitesses (29) selon l'une ou plusieurs des revendications précédentes, comprenant un dispositif (71) pour faire tourner le support annulaire (31), apte à mettre sélectivement le support annulaire (31) dans une pluralité de positions angulaires, dans chaque position angulaire, l'une desdites paires d'engrenages étant en position de prise angulaire avec le mouvement de la boîte de vitesses (29).

9. La boîte de vitesses (29) selon la revendication 7, dans laquelle le couplage mécanique entre le troisième engrenage annulaire (61) et l'arbre de sortie (45) comprend une première roue libre (62) ; de préférence l'arbre de sortie (45) étant un arbre creux et un arbre auxiliaire (63) pour la communication d'un mouvement provenant d'une source de mouvement auxiliaire s'étendant coaxialement avec l'arbre de sortie (45), une deuxième roue libre (69) étant agencée entre l'arbre de sortie creux (45) et l'arbre auxiliaire (63).

10. Un groupe motopropulseur (11) pour véhicule, dans laquelle ce groupe motopropulseur comprend :
un moteur (12) ayant un arbre d'entraînement (25) avec un pignon (27) ; et
une boîte de vitesses (29) selon l'une ou plusieurs des revendications précédentes; dans lequel le support annulaire (31) de la boîte de vitesses (29) est positionné de façon à faire engrener le pignon (27) sélectivement avec l'un des engrenages (35) desdites paires d'engrenages (33A-33J), suivant le rapport de transmission souhaité, grâce à une rotation du support annulaire (31) autour de l'axe de sélection ; et dans lequel le pignon comprend un axe de rotation externe au support annulaire (31), de sorte que le mouvement soit communiqué à la boîte de vitesses par l'intermédiaire du premier engrenage (35) de la paire d'engrenages (33A-33J), laquelle est en position de prise angulaire avec le mouvement à communiquer à la boîte de vitesse.

11. Le groupe motopropulseur (11) selon la revendication 10, dans lequel la boîte de vitesses (29) est conforme à l'une ou plusieurs des revendications 1 à 8, dans lequel le moteur (12) est un moteur électrique comprenant un stator (12S) et un rotor (12R) ; dans lequel une première roue libre (162) est interposée entre le rotor (12R) et l'arbre d'entraînement (25), et dans lequel une deuxième roue libre (169) interposée entre l'arbre d'entraînement (25) et un engrenage auxiliaire (171) coaxial avec l'arbre d'entraînement (25) et apte à recevoir un couple de torsion provenant d'une source auxiliaire couplée à l'arbre d'entraînement (25).

12. Le groupe motopropulseur (11) selon la revendication 11, dans lequel l'engrenage auxiliaire (171) engrène avec un engrenage auxiliaire (173) couplé à un arbre auxiliaire (63) ; dans lequel de préférence l'arbre auxiliaire (63) est coaxial avec l'axe de l'arbre de sortie ; dans lequel l'arbre auxiliaire est de préférence supporté rotatif à l'intérieur de l'arbre de sortie (45) ; et dans lequel, à des extrémités opposées de l'arbre auxiliaire (63) sont de préférence couplés des organes (15, 16) pour appliquer une force musculaire à l'arbre auxiliaire (63).

13. Un véhicule (1) comprenant :
un cadre (3) ;
au moins une roue motrice (5) ;
au moins une roue directrice (7) ;
un moteur (12) comprenant un arbre d'entraînement (25) avec un pignon (27) entraîné en rotation par l'arbre d'entraînement ;
une boîte de vitesses (29) interposée entre le moteur (12) et la roue motrice (5) ; ladite boîte de vitesses étant configurée suivant l'une ou plusieurs des revendications 1 à 9 ;
dans lequel le pignon (27) de l'arbre d'entraînement (25) est placé à l'extérieur du support annulaire (31) de la boîte de vitesses ; et dans lequel le support annulaire (31) est apte à prendre une pluralité de positions angulaires, de sorte que dans chaque position angulaire une paire respective parmi lesdites paires d'engrenages (33A-33J) est en position active, avec le premier engrenage respectif (35) en position de prise avec le pignon (27) de l'arbre d'entraînement.

14. Le véhicule (1) selon la revendication 13, dans lequel le véhicule est un véhicule à propulsion assistée, comprenant un arbre auxiliaire (63), auquel des arbres (15, 16) pour appliquer une force musculaire à l'arbre auxiliaire (63) sont couplés ; et dans lequel l'arbre auxiliaire est relié, par l'intermédiaire d'un système incluant des roues libres, à l'arbre de sortie (45).

15. Le véhicule (1) selon la revendication 14, dans lequel :
le moteur (12) est un moteur électrique comprenant un stator (12S) et un rotor (12R) ;
ladite boîte de vitesses est configurée suivant l'une ou plusieurs des revendications 1 8 ;
le système incluant des roues libres comprenant : une première roue libre (162) interposée entre le rotor (12R) et l'arbre d'entraînement (25) ; une deuxième roue libre (169) couplée à l'arbre d'entraînement (25) et interposée entre l'arbre d'entraînement (25) et un engrenage auxiliaire (171) coaxial avec l'arbre d'entraînement (25), engrenant avec une roue dentée auxiliaire (173) couplée à l'arbre auxiliaire (63) ; et
l'arbre auxiliaire (63) est coaxial avec l'axe de l'arbre de sortie (45) et supporté rotatif à l'intérieur de l'arbre de sortie (45).

16. Le véhicule (1) selon l'une ou plusieurs des revendications 13 à 15, dans lequel le véhicule est une bicyclette comprenant un boîtier de pédalier et dans lequel l'arbre de sortie (45) est coaxial avec le boîtier de pédalier.

17. Un procédé de conversion d'un véhicule à propulsion humaine (1) en un véhicule à propulsion assistée, comprenant l'étape d'insertion d'un groupe motopropulseur suivant l'une ou plusieurs des revendications 10 à 12 entre une ligne de transmission de couple de torsion à une roue motrice (5) du véhicule (1) ; en particulier dans lequel le véhicule (1) est une bicyclette et le groupe motopropulseur est remplacé par un boîtier de pédalier de bicyclette.
